# EUROPÄISCHE PATENTANMELDUNG

(11) **EP 3 457 000 A1**
(43) Veröffentlichungstag der Anmeldung: **20.03.2019**
(21) Anmeldenummer: 18181608.3
(22) Anmeldetag: 04.07.2018
(51) Int. Cl.: F16H 61/04

(54) **LANDWIRTSCHAFTLICHE ARBEITSMASCHINE UND VERFAHREN ZUM BETRIEB EINER LANDWIRTSCHAFTLICHEN ARBEITSMASCHINE**

(30) Priorität: 15.09.2017 DE 102017121412
(71) Anmelder: CLAAS Tractor S.A.S., 78141 Vélizy-Villacoublay Cedex (FR)
(72) Erfinder: Moersch, Claus, 33449 Langenberg (DE); Birkmann, Christian, 33775 Versmold (DE)
(74) Vertreter: CLAAS Gruppe

(57) **Zusammenfassung**

Die Erfindung betrifft eine landwirtschaftliche Arbeitsmaschine, insbesondere einen Traktor, mit einem Fahrantrieb (2), mit einer Antriebseinheit (7) umfassend mindestens einen Antriebsmotor (8) zum Antrieb des Fahrantriebs (2), mit einem Lastschaltgetriebe (9) zur Übertragung eines von der Antriebseinheit (7) abgegebenen Drehmoments zum Fahrantrieb (2), wobei das Lastschaltgetriebe (9) eine Drehmomentübertragung in unterschiedlichen Gängen erlaubt, und mit einer Regelungseinrichtung (10) zur Vergleichmäßigung des übertragenen Drehmoments bei einem Gangwechsel. Es wird vorgeschlagen, dass mindestens ein Schaltparameter des Lastschaltgetriebes (9) in Abhängigkeit eines Fahrzustandes (A, B, C) der landwirtschaftlichen Arbeitsmaschine (1) eingestellt und/oder berücksichtigt wird, um eine gleichmäßigere Drehmomentübertragung zu gewährleisten.

## Beschreibung

Die vorliegende Erfindung betrifft eine landwirtschaftliche Arbeitsmaschine gemäß dem Oberbegriff von Anspruch 1 und ein Verfahren zum Betrieb einer landwirtschaftlichen Arbeitsmaschine gemäß dem Oberbegriff von Anspruch 14.

Unter einer landwirtschaftlichen Arbeitsmaschine wird jegliche Form von Arbeitsfahrzeug verstanden, das mit einem eigenen Fahrantrieb (Antriebsachse mit Antriebsrädern oder dergleichen) versehen ist und zur Verrichtung landwirtschaftlicher Arbeit konfiguriert ist. Nur beispielhaft erwähnt seien als landwirtschaftliche Arbeitsmaschinen Traktoren, insbesondere mit angebauten Arbeitsaggregaten wie einem Pflug, einem Düngerstreuer, einer Sähmaschine, einer Spritzeinrichtung, einem Wender oder dergleichen, aber auch Erntemaschinen wie Mähdrescher, Feldhäcksler oder dergleichen.

Der Fahrantrieb wird in der Regel über eine Antriebseinheit mit mindestens einem Antriebsmotor betrieben, wobei die Antriebseinheit bzw. der Antriebsmotor eine Leistung bzw. ein Drehmoment und eine Drehzahl erzeugt, welche(s) über ein schaltbares Getriebe an den Fahrantrieb bzw. die Antriebsachse des Fahrantriebs übertragen wird. Bei landwirtschaftlichen Arbeitsmaschinen, insbesondere Traktoren, wird zur Drehmomentübertragung von der Antriebseinheit zum Fahrantrieb häufig ein sogenanntes Lastschaltgetriebe, beispielsweise ein Teillastgetriebe (teillastschaltbares Getriebe) oder ein Vollastgetriebe (vollastschaltbares Getriebe) eingesetzt. Ein Lastschaltgetriebe ermöglicht Gangwechsel (Schaltvorgänge) unter Last ohne Unterbrechung des Drehmoments. Dadurch können auch während des Gangwechsels Vortriebkräfte übertragen werden. Dies gilt zumindest für Gangwechsel innerhalb einer sogenannten Gruppe von Gängen, beispielsweise innerhalb einer Schnellganggruppe, einer Langsamganggruppe oder einer Rückwärtsganggruppe, wohingegen es bei einem Gruppenwechsel durchaus zu einer Unterbrechung der Vortriebkraft kommen kann. Bei einem unterbrechungsfreien Gangwechsel insbesondere innerhalb einer Gruppe kommt es üblicherweise zu einer Schwankung in dem übertragenen Drehmoment, was wiederum zu einer Schwankung in der Fahrzeuggeschwindigkeit führt, die sich beispielsweise beim Beschleunigen der landwirtschaftlichen Arbeitsmaschine als kurze beschleunigungsfreie Phase (Phase mit konstanter Geschwindigkeit) bemerkbar macht. Diese kurzen beschleunigungs-Ifreien Phasen führen zu einer Verzögerung des Beschleunigungsvorgangs, da eben nicht konstant durchbeschleunigt wird, wodurch sich letztlich das Erreichen der gewünschten Zielgeschwindigkeit verzögert.

Diese Problematik ist auch bei Kraftfahrzeugen bekannt. Gemäß der DE 103 30 154 A1 wird ein Schaltelement eines Getriebes über ein hydraulisches Schaltventil mit Druck versorgt. Um einen Gangwechsel durchzuführen, muss nach der Anforderung des Gangwechsels zunächst das zu schaltende Schaltelement für die Drehmomentübernahme vorbereitet werden, indem dieses mit Öl befüllt wird. Bei dem abzuschaltenden Schaltelement muss der Öldruck dagegen reduziert werden. Diese vorbereitenden Maßnahmen, bevor der eigentliche Gangwechsel stattfindet, führen zu Verzögerungszeiten, die eine Verzögerung des Beschleunigungsvorgangs zur Folge haben. Um solche Verzögerungszeiten zu verkürzen, ist bei dem bekannten Kraftfahrzeuggetriebe eine Regelungseinrichtung vorgesehen, die bereits bei Annäherung an eine Schaltkennlinie, also eine Kennlinie, deren Erreichen zu einer Anforderung eines Gangwechsels führt, die besagten vorbereitenden Maßnahmen einleitet. Sobald nun die Schaltkennlinie erreicht wird und der Gangwechsel tatsächlich angefordert wird, sind die vorbereitenden Maßnahmen daher bereits zum Teil abgeschlossen, wodurch der Gangwechsel schneller erfolgt. Dadurch wird das übertragene Drehmoment vergleichmäßigt, da es während des Gangwechsels nicht so stark absackt.

Auch bei landwirtschaftlichen Arbeitsmaschinen ist es zur Verbesserung des Fahrverhaltens wünschenswert, dass das Drehmoment bei einem Gangwechsel möglichst wenig absackt.

Der Erfindung liegt das Problem zugrunde, die bekannte landwirtschaftliche Arbeitsmaschine dahingehend weiterzubilden, dass das Fahrverhalten bei Gangwechseln verbessert wird.

Das obige Problem wird gemäß einer ersten Lehre der Erfindung bei einer landwirtschaftlichen Arbeitsmaschine gemäß dem Oberbegriff von Anspruch 1 durch die Merkmale des kennzeichnenden Teils von Anspruch 1 gelöst.

Die landwirtschaftliche Arbeitsmaschine, bei der es sich insbesondere um einen Traktor handelt, weist einen Fahrantrieb und eine Antriebseinheit umfassend mindestens einen Antriebsmotor auf. Zwischen Antriebseinheit und Fahrantrieb ist ein Lastschaltgetriebe, beispielsweise ein Teillastgetriebe (teillastschaltbares Getriebe) oder ein Vollastgetriebe (vollastschaltbares Getriebe), geschaltet, das zur Übertragung eines von der Antriebseinheit abgegebenen Drehmoments zum Fahrantrieb dient. Das Lastschaltgetriebe erlaubt eine Drehmomentübertragung in unterschiedlichen Gängen bzw. Untersetzungen. Bei einem Schaltvorgang, wenn also zwischen zwei Gängen bzw. Untersetzungen gewechselt wird, wird das übertragene Drehmoment mittels einer Regelungseinrichtung der landwirtschaftlichen Arbeitsmaschine vergleichmäßigt. "Vergleichmäßigt" bedeutet, dass der Drehmomentenverlauf (Verlauf des Drehmoments über die Zeit) durch Gangwechsel weniger stark beeinflusst wird und insbesondere einem gleichmäßigen Verlauf zumindest angenähert wird. So hätte bei einem Gangwechsel ohne eine solche Regelungseinrichtung zur Vergleichmäßigung des übertragenen Drehmoments der Drehmomentenverlauf einen ungleichmäßigen, schwankenden Verlauf, da bei jedem Gangwechsel das Drehmoment kurzzeitig absackt.

Um die besagte Vergleichmäßigung des übertragenen Drehmoments bei einem Gangwechsel, insbesondere während einer Beschleunigung oder Verzögerung zum Beispiel beim Anfahren oder Reversieren, zu bewirken, wird bei der vorschlagsgemäßen landwirtschaftlichen Arbeitsmaschine mindestens ein Schaltparameter des Lastschaltgetriebes in Abhängigkeit eines Fahrzustandes der landwirtschaftlichen Arbeitsmaschine eingestellt und/oder berücksichtigt. Ein Schaltparameter ist ein Parameter, der den Schaltvorgang bzw. das Schaltverhalten des Lastschaltgetriebes beeinflusst. Vorschlagsgemäß geschieht dies in Abhängigkeit eines Fahrzustandes, beispielsweise in Abhängigkeit davon, ob die landwirtschaftliche Arbeitsmaschine beschleunigt oder sich mit konstanter Geschwindigkeit bewegt oder verzögert. Vorschlagsgemäß wird also zunächst der Fahrzustand bestimmt und dann im Optimierungsprozess mindestens ein für diesen Fahrzustand relevanter Schaltparameter eingestellt, indem beispielsweise die Motordrehzahl erhöht wird, und/oder mindestens ein für diesen Fahrzustand relevanter Schaltparameter berücksichtigt, beispielsweise eine Umgebungsbedingung. Berücksichtigt bedeutet, dass der jeweilige Parameter (beispielsweise die Umgebungsbedingung) erfasst oder vorgegeben wird und dann in den Optimierungsprozess einbezogen wird.

Indem vorschlagsgemäß das Schaltverhalten beim Gangwechsel durch für den jeweiligen Fahrzustand relevante, berücksichtigte und/oder eingestellte Schaltparameter beeinflusst wird, kann der eigentliche Gangwechsel so optimiert werden, dass gangwechselbedingte Drehmomentschwankungen minimiert werden. Entsprechend werden auch die daraus resultierenden Schwankungen in der Fahrzeuggeschwindigkeit, beispielsweise beim Beschleunigen der landwirtschaftlichen Arbeitsmaschine auf eine vorgegebene Zielgeschwindigkeit, minimiert. Insgesamt wird das Fahrverhalten in dem jeweiligen Fahrzustand dadurch verbessert.

Die Regelungseinrichtung ist nach der bevorzugten Ausgestaltung gemäß Anspruch 2 konfiguriert, den Fahrzustand der landwirtschaftlichen Arbeitsmaschine automatisch zu erfassen. Grundsätzlich ist es aber auch denkbar, der Regelungseinrichtung den jeweiligen Fahrzustand durch eine entsprechende Bedienereingabe vorzugeben. Der Fahrzustand kann beispielsweise über einen tatsächlichen Betriebspunkt (Arbeitspunkt), das heißt einen bestimmten Punkt im Kennfeld oder auf der Drehmoment- oder Leistungskennlinie der Antriebseinheit bzw. des mindestens einen Antriebsmotors, von der Regelungseinrichtung bestimmt werden (Anspruch 3). Der Fahrzustand kann auch durch eine insbesondere generierte oder abgerufene Anforderung, zum Beispiel ein eine Beschleunigung oder eine Verzögerung der landwirtschaftlichen Arbeitsmaschine charakterisierendes Anforderungssignal, von der Regelungseinrichtung bestimmt werden.

Anspruch 4 definiert verschiedene mögliche Fahrzustände, zwischen denen unterschieden wird, insbesondere eine Beschleunigung, eine Konstantfahrt oder eine Verzögerung der landwirtschaftlichen Arbeitsmaschine. Grundsätzlich können auch noch weitere Fahrzustände und/oder Kombinationen der vorgenannten Fahrzustände vorgesehen sein.

Der mindestens eine für den jeweiligen Fahrzustand relevante Schaltparameter kann wie gesagt ein einstellbarer Parameter sein und/oder ein Parameter, der bei dem von der Regelungseinrichtung geregelten Optimierungsprozess lediglich berücksichtigt wird. Ein einzustellender Schaltparameter ist insbesondere ein fahrzeugbezogener Parameter (Anspruch 5), bei dem es sich vorzugsweise um die von der Antriebseinheit abgegebene Leistung, also die Motorleistung des mindestens einen Antriebsmotors, die Abtriebsdrehzahl der Antriebseinheit, das heißt der Antriebswelle bzw. Getriebeeingangswelle, und/oder das Kupplungsverhalten, insbesondere den Zeitpunkt des Einkuppelns oder die Dauer des Einkuppelns des neuen Schaltelements, handelt (Anspruch 6). Bei dem Fahrzustand "Beschleunigung", also bei einem Beschleunigungsvorgang der landwirtschaftlichen Arbeitsmaschine, ist es beispielsweise denkbar, die von der Antriebseinheit abgegebene Leistung insbesondere unmittelbar vor einem Gangwechsel kurzzeitig zu erhöhen, beispielsweise durch Änderung der Einspritzmenge oder Veränderung des Kraftstoffgemisches, insbesondere des Verbrennungsluftverhältnisses, derart, dass während des Gangwechsels das übertragene Drehmoment weniger stark absackt und im Idealfall sogar konstant bleibt. Grundsätzlich wäre es auch denkbar, die von der Antriebseinheit abgegebene Leistung kurzzeitig durch Zuschaltung eines weiteren Antriebsmotors, beispielsweise Elektromotors, zu erhöhen, um den vorgenannten Effekt zu erzielen. Ein Absacken des Drehmoments bei einem Gangwechsel während einer Beschleunigungsphase kann auch durch eine kurzzeitige Abtriebsdrehzahlerhöhung der Antriebseinheit zumindest teilweise ausgeglichen werden.

Statt einen Schaltparameter einzustellen, ist es gemäß der bevorzugten Ausgestaltung nach Anspruch 7 auch denkbar, mindestens einen fahrzeugbezogenen und/oder umgebungsbezogenen Parameter lediglich zu berücksichtigen. Als fahrzeugbezogener Schaltparameter kann beispielsweise die Fahrzeuggeschwindigkeit, die Änderung der Fahrzeuggeschwindigkeit beim Beschleunigen oder Verzögern, aber auch die von der Antriebseinheit abgegebene Leistung, die Abtriebsdrehzahl der Antriebseinheit und/oder das Kupplungsverhalten berücksichtigt werden (Anspruch 8). Als umgebungsbezogener Schaltparameter kann beispielsweise die Steigung des Geländes, die Bodenbeschaffenheit, der durchgeführte landwirtschaftliche Arbeitsauftrag und/oder die Art des durchfahrenen Feldbestands berücksichtigt werden (Anspruch 9).

Soll ein Schaltparameter eingestellt werden, um den Gangwechsel hinsichtlich einer gleichmäßigeren Drehmomentübertragung zu optimieren, wird die Einstellung gemäß der besonders bevorzugten Ausgestaltung gemäß Anspruch 10 unmittelbar vor dem jeweiligen Gangwechsel vorgenommen. Der Begriff "unmittelbar vor" ist hier weit zu verstehen und definiert allgemein jeden Zeitpunkt vor dem durchzuführenden Gangwechsel bzw. Schaltvorgang, zu dem der abzuschaltende Gang das von der Antriebseinheit abgegebene Drehmoment noch allein überträgt. Bevorzugt ist mit "unmittelbar vor" ein definierter, konstanter Abstand zu einer Schaltkennlinie gemeint, deren Erreichen eine Anforderung zur Auslösung eines Schaltvorgangs auslöst. Entsprechende Schaltkennlinien können in einem Speicher der Regelungseinrichtung hinterlegt sein (Anspruch 12). Eine Schaltkennlinie kann beispielsweise eine Rückschalt-Kennlinie sein, deren Erreichen einen Gangwechsel in einen niedrigeren Gang bewirkt, oder eine Hochschalt-Kennlinie, deren Erreichen einen Gangwechsel in einen höheren Gang bewirkt. Eine Schaltkennlinie kann beispielsweise die Fahrpedalstellung (Fahrpedalwert bzw. Fahrpedalwinkel) relativ zur Fahrzeuggeschwindigkeit definieren. Auch andere Definitionen sind denkbar, beispielsweise Abtriebsdrehzahl der Antriebseinheit (Drehzahl der Antriebswelle bzw. Motorwelle) bezogen auf die Fahrzeuggeschwindigkeit. Grundsätzlich ist es sogar denkbar, dass der mindestens eine Schaltparameter während des Gangwechsels bzw. Schaltvorgangs eingestellt wird.

Bei der Ausgestaltung gemäß Anspruch 13 ist der Gangwechsel, der hinsichtlich einer gleichmäßigeren Drehmomentübertragung optimiert werden soll, ein Gangwechsel innerhalb einer Gruppe von Gängen, beispielsweise innerhalb einer Schnellganggruppe, einer Langsamganggruppe oder einer Rückwärtsganggruppe. Es ist aber auch denkbar, einen Gangwechsel zwischen zwei Gruppen von Gängen (einen Gruppenwechsel) auf dieselbe Weise zu optimieren.

Nach einer weiteren Lehre gemäß Anspruch 14, der eigenständige Bedeutung zukommt, wird ein Verfahren zum Betrieb einer landwirtschaftlichen Arbeitsmaschine, insbesondere einer wie zuvor definierten landwirtschaftlichen Arbeitsmaschine, beansprucht, bei dem während des Betriebs der landwirtschaftlichen Arbeitsmaschine eine Regelungseinrichtung das von einer Antriebseinheit mit mindestens einem Antriebsmotor über ein Lastschaltgetriebe an einen Fahrantrieb übertragene Drehmoment bei einem Gangwechsel vergleichmäßigt. Vorschlagsgemäß ist dabei vorgesehen, dass mindestens ein Schaltparameter des Lastschaltgetriebes in Abhängigkeit eines Fahrzustandes der landwirtschaftlichen Arbeitsmaschine eingestellt und/oder berücksichtigt wird, um eine gleichmäßigere Drehmomentübertragung zu gewährleisten.

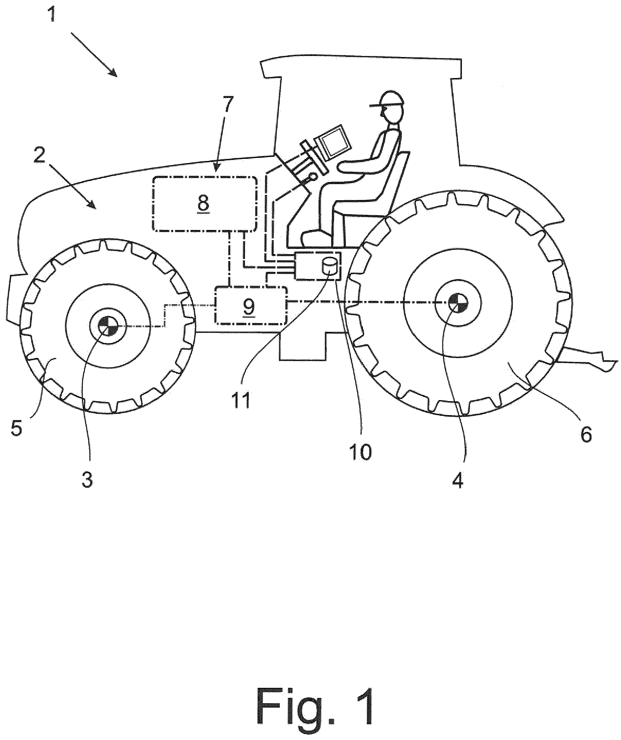

Im Folgenden wird die Erfindung anhand einer lediglich ein Ausführungsbeispiel darstellenden Zeichnung näher erläutert. In der Zeichnung zeigt
- Fig. 1: eine vorschlagsgemäße landwirtschaftliche Arbeitsmaschine in einer schematischen Seitenansicht und
- Fig. 2: ein Fahrzeuggeschwindigkeit-Zeit-Diagramm a) einer landwirtschaftlichen Arbeitsmaschine gemäß dem Stand der Technik und b) der landwirtschaftlichen Arbeitsmaschine gemäß Fig. 1.

Die vorschlagsgemäße Lösung lässt sich auf einen weiten Bereich landwirtschaftlicher Arbeitsmaschinen 1 anwenden. Dazu gehören Traktoren, insbesondere mit angebauten Arbeitsaggregaten wie Pflügen, Düngerstreuern, Sämaschinen, Spritzeinrichtungen, Wendern oder dergleichen, aber auch Erntemaschinen wie Mähdrescher, Feldhäcksler oder dergleichen. Bei dem dargestellten und insoweit bevorzugten Ausführungsbeispiel handelt es sich bei der landwirtschaftlichen Arbeitsmaschine 1 um einen Traktor, der in an sich üblicher Weise mit einem vorderen und/oder hinteren Anbaugerät (nicht dargestellt), beispielsweise einem Pflug, ausgestattet sein kann. Alle Ausführungen zu einem Traktor gelten für alle anderen Arten von landwirtschaftlichen Arbeitsmaschinen 1 entsprechend.

Die vorschlagsgemäße landwirtschaftliche Arbeitsmaschine 1 ist mit einem Fahrantrieb 2 ausgestattet, der hier und vorzugsweise zwei Antriebsachsen 3, 4 mit Antriebsrädern 5, 6 aufweist. Der Fahrantrieb 2 wird von einer Antriebseinheit 7 angetrieben, die mindestens einen Antriebsmotor 8 umfasst.

Das von der Antriebseinheit 7 bzw. dem Antriebsmotor 8 während des Betriebs erzeugte Drehmoment wird über ein Lastschaltgetriebe 9, das ein Schalten einzelner Gänge unter Last und ohne Unterbrechung der Vortriebkraft erlaubt, zum Fahrantrieb 2 übertragen.

Eine Regelungseinrichtung 10 der landwirtschaftlichen Arbeitsmaschine 1 sorgt für eine Vergleichmäßigung des übertragenen Drehmoments bei Gangwechseln. Mit einer Vergleichmäßigung ist gemeint, dass bei einem Beschleunigungsvorgang oder einer Konstantfahrt ein unerwünschtes Absacken des Drehmoments während eines Gangwechsels zumindest minimiert wird und im Idealfall sogar vollständig ausgeglichen wird. Entsprechendes gilt für einen unerwünschten kurzzeitigen Drehmomentanstieg während eines Gangwechsels bei einem Verzögerungsvorgang.

Wesentlich ist nun, dass das Lastschaltgetriebe 9 basierend auf mindestens einem Schaltparameter betreibbar ist, der in Abhängigkeit eines Fahrzustandes A, B, C der landwirtschaftlichen Arbeitsmaschine 1 eingestellt und/oder berücksichtigt wird.

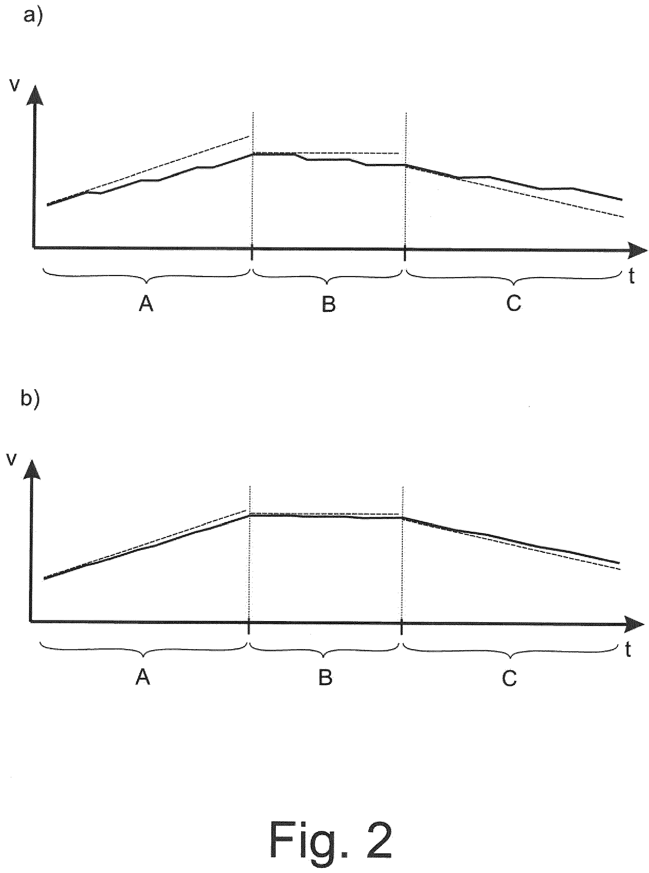

Die Schaltparameter werden, wie Fig. 2b zeigt, für den Fahrzustand "Beschleunigung" A, "Konstantfahrt" B und "Verzögerung" C jeweils individuell eingestellt und/oder berücksichtigt. Wie der Vergleich der Fig. 2a, die den Stand der Technik wiedergibt, mit der Fig. 2b, die die vorschlagsgemäße Lösung wiedergibt, zeigt, wird durch die mit der vorschlagsgemäßen Lösung erreichbare Vergleichmäßigung des Drehmoments bei einem Gangwechsel der Verlauf der Fahrzeuggeschwindigkeit v ebenfalls entsprechend vergleichmäßigt, wodurch der tatsächliche Fahrzeuggeschwindigkeitsverlauf (mit durchgezogener Linie dargestellt) näher am idealen bzw. vom Fahrer erwarteten Fahrzeuggeschwindigkeitsverlauf (gestrichelt dargestellt) liegt als beim Stand der Technik.

Im Einzelnen zeigt Fig. 2a für den Stand der Technik während eines Beschleunigungszustands A einen relativ langsamen Anstieg der Fahrzeuggeschwindigkeit v über die Zeit t, da durch ein relativ starkes bzw. langes Absinken des übertragenen Drehmoments bei jedem Gangwechsel eine Unterbrechung des Beschleunigungsvorgangs durch kurze Phasen konstanter Geschwindigkeit erfolgt. Wie deutlich in Fig. 2a erkennbar ist, weicht der tatsächliche Fahrzeuggeschwindigkeitsverlauf mit zunehmender Dauer des Beschleunigungsvorgangs immer mehr vom idealen bzw. vom Fahrer erwarteten Fahrzeuggeschwindigkeitsverlauf ab. Entsprechendes gilt auch für den Fahrzustand B einer Konstantfahrt, bei dem im Idealfall die Fahrzeuggeschwindigkeit gehalten werden sollte, tatsächlich aber aufgrund von einem gangwechselbedingten Absacken des Drehmoments immer weiter absinkt. Bei einem Verzögerungszustand C kommt es wiederum zu gangwechselbedingten Anstiegen des Drehmoments, die dazu führen, dass die Fahrzeuggeschwindigkeit nicht wie vom Fahrer erwartet gleichmäßig absinkt, sondern aufgrund kurzer Phasen beispielsweise konstanter Geschwindigkeit vergleichsweise langsam absinkt, was sich insbesondere über eine längere Dauer eines Verzögerungsvorgangs bemerkbar macht.

In Fig. 2b ist dagegen erkennbar, dass die fahrzustandsabhängige Einstellung und/oder Berücksichtigung mindestens eines Schaltparameters des Lastschaltgetriebes 9 durch eine optimierte Vergleichmäßigung des übertragenen Drehmoments bei einem Gangwechsel bewirkt, dass der tatsächliche Fahrzeuggeschwindigkeitsverlauf bei allen Fahrzuständen A, B, C weniger stark und im Idealfall überhaupt nicht mehr vom idealen bzw. vom Fahrer erwarteten Fahrzeuggeschwindigkeitsverlauf abweicht.

Um den vorgenannten Effekt zu erreichen, ist die Regelungseinrichtung 10 hier und vorzugsweise konfiguriert, einen Fahrzustand A, B, C der landwirtschaftlichen Arbeitsmaschine 1 jeweils automatisch zu erfassen. So kann der Fahrzustand A, B, C beispielsweise über einen tatsächlichen Betriebspunkt und/oder über eine, beispielsweise generierte oder abgerufene, Anforderung bzw. ein eine Beschleunigung oder Verzögerung charakterisierendes entsprechendes Anforderungssignal bestimmt werden.

Die Regelungseinrichtung 10 ist bei dem hier beschriebenen Ausführungsbeispiel ferner konfiguriert, fahrzeugbezogene Parameter als Schaltparameter des Lastschaltgetriebes 9 einzustellen, darunter die von der Antriebseinheit 7 abgegebene Leistung, das heißt die Motorleistung des Antriebsmotors 8 oder der Antriebsmotoren 8, die Abtriebsdrehzahl der Antriebseinheit 7, das heißt die Motor- oder Antriebswellendrehzahl, und/oder das Kupplungsverhalten. Das Kupplungsverhalten lässt sich beispielsweise dadurch beeinflussen, dass der Zeitpunkt des Einkuppelns oder die Dauer des Einkuppelns verändert, insbesondere verkürzt, wird, was beispielsweise durch den Zeitpunkt und die Geschwindigkeit der Zugabe von Hydrauliköl zum zu schaltenden Schaltelement erreicht werden kann.

Neben der Möglichkeit, mindestens einen Schaltparameter einzustellen, besteht zusätzlich oder alternativ auch die Möglichkeit, mindestens einen Schaltparameter lediglich zu berücksichtigen, um darüber eine gleichmäßigere Drehmomentübertragung bei einem Gangwechsel zu gewährleisten. Ein solcher Schaltparameter kann ebenfalls ein fahrzeugbezogener, aber auch ein umgebungsbezogener Parameter sein. Zu berücksichtigende fahrzeugbezogene Schaltparameter sind hier und vorzugsweise die Fahrzeuggeschwindigkeit, die Änderung der Fahrzeuggeschwindigkeit beim Beschleunigen oder Verzögern, die von der Antriebseinheit abgegebene Leistung bzw. Motorleistung, die Abtriebsdrehzahl der Antriebseinheit bzw. Antriebswelle und/oder das Kupplungsverhalten, insbesondere der Zeitpunkt und/oder die Dauer des Einkuppelns. Zu berücksichtigende umgebungsbezogene Schaltparameter sind hier beispielsweise die Steigung des Geländes, die Bodenbeschaffenheit, der ausgeführte landwirtschaftliche Arbeitsauftrag und/oder die Art des durchfahrenen Feldbestands.

Der mindestens eine einstellbare Schaltparameter wird hier und vorzugsweise unmittelbar vor einem bevorstehenden Gangwechsel eingestellt, insbesondere eine bestimmte vorgegebene Zeitspanne vor dem bevorstehenden Gangwechsel. Wann ein Gangwechsel bevorsteht, erkennt die Regelungseinrichtung 10 anhand von in einem Speicher 11 hinterlegten Schaltkennlinien, so dass bei Annäherung an eine solche Schaltkennlinie die Regelungseinrichtung 10 die besagte Einstellung und/oder Berücksichtigung des oder der Schaltparameter vornehmen kann. Dabei wird der Zeitpunkt, an dem der jeweilige Schaltparameter eingestellt wird, hier und vorzugsweise für jeden Gangwechsel individuell festgelegt oder von der Regelungseinrichtung 10 für jeden Gangwechsel individuell bestimmt.

Der jeweilige Gangwechsel, bei dem das übertragene Drehmoment durch die vorschlagsgemäße Lösung vergleichmäßigt wird, ist hier und vorzugsweise ein Gangwechsel innerhalb einer Gruppe von Gängen, kann grundsätzlich aber auch ein Gangwechsel zwischen zwei Gruppen von Gängen (ein Gruppenwechsel) sein.

### Bezugszeichenliste

- 1: Landwirtschaftliche Arbeitsmaschine
- 2: Fahrantrieb
- 3: vordere Antriebsachse
- 4: hintere Antriebsachse
- 5: vordere Antriebsräder
- 6: hintere Antriebsräder
- 7: Antriebseinheit
- 8: Antriebsmotor
- 9: Lastschaltgetriebe
- 10: Regelungseinrichtung
- 11: Speicher
- A: Fahrzustand "Beschleunigung"
- B: Fahrzustand "Konstantfahrt"
- C: Fahrzustand "Verzögerung"
- v: Fahrzeuggeschwindigkeit
- t: Zeit

## Patentansprüche

1. Landwirtschaftliche Arbeitsmaschine, insbesondere Traktor, mit einem Fahrantrieb (2), mit einer Antriebseinheit (7) umfassend mindestens einen Antriebsmotor (8) zum Antrieb des Fahrantriebs (2), mit einem Lastschaltgetriebe (9) zur Übertragung eines von der Antriebseinheit (7) abgegebenen Drehmoments zum Fahrantrieb (2), wobei das Lastschaltgetriebe (9) eine Drehmomentübertragung in unterschiedlichen Gängen erlaubt, und mit einer Regelungseinrichtung (10) zur Vergleichmäßigung des übertragenen Drehmoments bei einem Gangwechsel,
**dadurch gekennzeichnet,**
**dass** mindestens ein Schaltparameter des Lastschaltgetriebes (9) in Abhängigkeit eines Fahrzustandes (A, B, C) der landwirtschaftlichen Arbeitsmaschine (1) eingestellt und/oder berücksichtigt wird, um eine gleichmäßigere Drehmomentübertragung zu gewährleisten.

2. Landwirtschaftliche Arbeitsmaschine nach Anspruch 1, **dadurch gekennzeichnet, dass** die Regelungseinrichtung (10) konfiguriert ist, den Fahrzustand (A, B, C) der landwirtschaftlichen Arbeitsmaschine (1) automatisch zu erfassen.

3. Landwirtschaftliche Arbeitsmaschine nach Anspruch 1 oder 2, **dadurch gekennzeichnet, dass** die Regelungseinrichtung (10) konfiguriert ist, den Fahrzustand (A, B, C) der landwirtschaftlichen Arbeitsmaschine (1) anhand des tatsächlichen Betriebspunkts und/oder anhand eines Anforderungssignals zu erfassen.

4. Landwirtschaftliche Arbeitsmaschine nach einem der vorhergehenden Ansprüche, **dadurch gekennzeichnet, dass** der Fahrzustand (A, B, C) der landwirtschaftlichen Arbeitsmaschine (1) eine Beschleunigung (A), eine Konstantfahrt (B) oder eine Verzögerung (C) ist.

5. Landwirtschaftliche Arbeitsmaschine nach einem der vorhergehenden Ansprüche, **dadurch gekennzeichnet, dass** die Regelungseinrichtung (10) konfiguriert ist, als Schaltparameter einen fahrzeugbezogenen Parameter einzustellen.

6. Landwirtschaftliche Arbeitsmaschine nach einem der vorhergehenden Ansprüche, **dadurch gekennzeichnet, dass** die Regelungseinrichtung (10) konfiguriert ist, als fahrzeugbezogenen Schaltparameter die von der Antriebseinheit (7) abgegebene Leistung, die Abtriebsdrehzahl der Antriebseinheit (7) und/oder das Kupplungsverhalten des Lastschaltgetriebes (9) einzustellen.

7. Landwirtschaftliche Arbeitsmaschine nach einem der vorhergehenden Ansprüche, **dadurch gekennzeichnet, dass** die Regelungseinrichtung (10) konfiguriert ist, als Schaltparameter einen fahrzeugbezogenen und/oder einen umgebungsbezogenen Parameter zu berücksichtigen.

8. Landwirtschaftliche Arbeitsmaschine nach einem der vorhergehenden Ansprüche, **dadurch gekennzeichnet, dass** die Regelungseinrichtung (10) konfiguriert ist, als fahrzeugbezogenen Schaltparameter die Fahrzeuggeschwindigkeit, die Änderung der Fahrzeuggeschwindigkeit, die von der Antriebseinheit (7) abgegebene Leistung, die Abtriebsdrehzahl der Antriebseinheit (7) und/oder das Kupplungsverhalten des Lastschaltgetriebes (9) zu berücksichtigen.

9. Landwirtschaftliche Arbeitsmaschine nach einem der vorhergehenden Ansprüche, **dadurch gekennzeichnet, dass** die Regelungseinrichtung (10) konfiguriert ist, als umgebungsbezogenen Schaltparameter die Steigung des Geländes, die Bodenbeschaffenheit, den durchgeführten landwirtschaftlichen Arbeitsauftrag und/oder die Art des Feldbestands zu berücksichtigen.

10. Landwirtschaftliche Arbeitsmaschine nach einem der vorhergehenden Ansprüche, **dadurch gekennzeichnet, dass** der mindestens eine Schaltparameter unmittelbar vor einem Gangwechsel oder während eines Gangwechsels eingestellt wird.

11. Landwirtschaftliche Arbeitsmaschine nach einem der vorhergehenden Ansprüche, **dadurch gekennzeichnet, dass** der Zeitpunkt, an dem der jeweilige Schaltparameter eingestellt wird, für jeden Gangwechsel individuell festgelegt ist oder individuell von der Regelungseinrichtung (10) bestimmt wird.

12. Landwirtschaftliche Arbeitsmaschine nach einem der vorhergehenden Ansprüche, **dadurch gekennzeichnet, dass** der Zeitpunkt des jeweiligen Gangwechsels durch Schaltkennlinien vorgegeben ist, die in einem Speicher (11) der Regelungseinrichtung (10) hinterlegt sind.

13. Landwirtschaftliche Arbeitsmaschine nach einem der vorhergehenden Ansprüche, **dadurch gekennzeichnet, dass** der Gangwechsel ein Gangwechsel innerhalb einer Gruppe von Gängen oder zwischen zwei Gruppen von Gängen ist.

14. Verfahren zum Betrieb einer landwirtschaftlichen Arbeitsmaschine (1), insbesondere einer landwirtschaftlichen Arbeitsmaschine (1) nach einem der vorhergehenden Ansprüche, bei dem während des Betriebs der landwirtschaftlichen Arbeitsmaschine (1) eine Regelungseinrichtung (10) das von einer Antriebseinheit (7) mit mindestens einem Antriebsmotor (8) über ein Lastschaltgetriebe (9) an einen Fahrantrieb (2) übertragene Drehmoment bei einem Gangwechsel vergleichmäßigt,
**dadurch gekennzeichnet,**
**dass** mindestens ein Schaltparameter des Lastschalgetriebes (9) in Abhängigkeit eines Fahrzustandes (A, B, C) der landwirtschaftlichen Arbeitsmaschine eingestellt und/oder berücksichtigt wird, um eine gleichmäßigere Drehmomentübertragung zu gewährleisten.
